Europäisches Patentamt

European Patent Office

Office européen des brevets

(19)

(11) EP 0 674 188 B1

(12) FASCICULE DE BREVET EUROPEEN

(45) Date de publication et mention
de la délivrance du brevet:
30.09.1998 Bulletin 1998/40

(51) Int Cl.⁶: **G01T 1/29**, G01T 7/00,
G01T 1/164

(21) Numéro de dépôt: 95400604.5

(22) Date de dépôt: 20.03.1995

(54) **Dispositif de localisation en temps réel de sources de rayonnement**

Vorrichtung zur Echtzeitlokalisierung von Strahlenquellen

Apparatus for localising radiation sources in real time

(84) Etats contractants désignés:
BE CH DE ES FR GB LI

(30) Priorité: 21.03.1994 FR 9403279

(43) Date de publication de la demande:
27.09.1995 Bulletin 1995/39

(73) Titulaire: COMMISSARIAT A L'ENERGIE
ATOMIQUE
75015 Paris Cédex 15 (FR)

(72) Inventeurs:
• Carcreff, Hubert
F-78114 Cressely (FR)
• Thellier, Gilles
F-91000 Evry (FR)

(74) Mandataire: Dubois-Chabert, Guy et al
c/o BREVATOME
25, rue de Ponthieu
75008 Paris (FR)

(56) Documents cités:
EP-A- 0 425 333          US-A- 3 107 276
US-A- 4 528 453

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

Domaine technique et art antérieur

La présente invention concerne un ensemble collimateur-obturateur, notamment pour gamma-caméra.

L'invention s'applique en particulier à un dispositif tel que celui décrit dans la demande de brevet européen déposé au nom de la demanderesse, publiée sous le n° EP-A-0 425 333 (US-5 204 533) et intitulée "Dispositif de localisation en temps réel de sources de rayonnement".

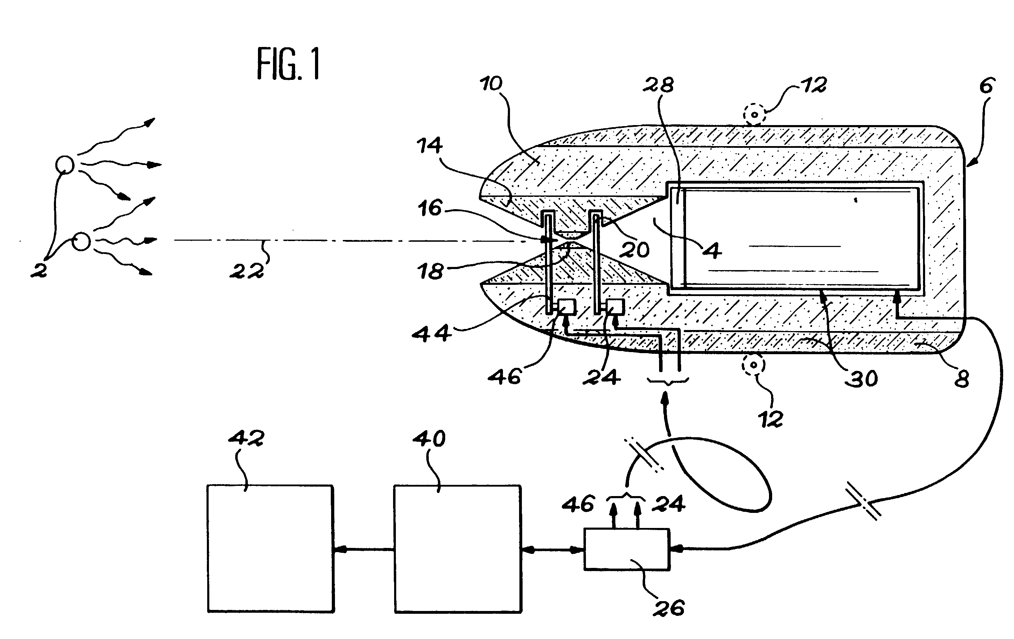

Le dispositif décrit dans la demande ci-dessus est illustré sur la figure 1.

Ce dispositif est destiné à la localisation de sources de rayonnement 2, notamment de sources de rayonnement gamma qui sont susceptibles de se trouver dans un local. Il comprend une chambre 4 à sténopé, formée dans un corps 6 qui constitue un blindage de la chambre 4 vis-à-vis du rayonnement gamma. Ce corps 6 peut être fait d'un alliage approprié à base de tungstène, tel que l'alliage connu sous le nom "DENAL". Il peut comporter une partie périphérique 8 amovible, dans laquelle est insérée le reste 10 du corps, ce qui permet de choisir un blindage périphérique 8 de plus ou moins grande épaisseur suivant que l'activité des sources 2 environnantes est plus ou moins importante.

Des moyens 12 symbolisent un support orientable du corps 6 et donc du dispositif.

Le reste 10 du corps 6 comporte un collimateur 14 en regard de la chambre 4. La paroi du collimateur 14 est constituée de deux cônes de même angle d'ouverture, opposés par leur sommet commun qui est percé pour former le sténopé 16.

Ce collimateur 14 peut comporter, au niveau et autour du sténopé 16, une partie 18 opaque à la lumière (visible) qui provient de la zone examinée mais perméable au rayonnement gamma, pour tenir compte d'une éventuelle insuffisance d'activité des sources 2 de rayonnement gamma que l'on veut localiser (sténopé à double diaphragme).

De plus, le collimateur 14 peut être interchangeable, ce qui permet de choisir un collimateur à simple ou double diaphragme, d'ouverture adaptée à l'activité supposée des sources gamma 2 que l'on veut localiser.

Le dispositif comprend en outre un obturateur mécanique 20 prévu pour empêcher la lumière visible de la zone de pénétrer dans la chambre 4, tout en laissant passer le rayonnement gamma. Cet obturateur 20 est un iris de type appareil photo, ou, par exemple, une plaque métallique qui est perpendiculaire à l'axe 22 du corps 6, située à proximité du sténopé 16, du côté de la chambre 4, et escamotable. Les mouvements de la plaque formant l'obturateur 20 sont télécommandés par des moyens électromécaniques 24 qui sont eux-mêmes commandés par un boîtier de télécommande 26. Ce dernier peut être placé à grande distance du dispositif si nécessaire.

Le dispositif comprend aussi, dans la chambre 4, en regard du sténopé 16, un écran luminescent 28 qui repose contre un épaulement circulaire interne du corps 6, au niveau de la base de la paroi conique du collimateur 14.

Derrière l'écran 28 se trouve une caméra 30 reliée à des moyens 40 d'acquisition en temps réel, de traitement et de visualisation des signaux électriques, et à des moyens de mémorisation 42.

Lorsque l'obturateur 20 est fermé, on obtient au bout d'un certain temps (quelques secondes, par exemple 10 s) l'image des sources de rayonnement gamma. Cette image est stockée dans une première zone de mémoire des moyens 40.

Ensuite, en commandant l'ouverture de l'obturateur 20, on obtient, de façon quasi-instantanée, une image (en lumière visible) de la zone observée, dans laquelle sont les sources 2. Cette seconde image est également stockée dans une seconde zone de mémoire des moyens 40, distincte de la première zone de mémoire.

Le dispositif représenté sur la figure 1 peut comporter en outre des moyens escamotables 44 d'atténuation des rayonnements gamma avant que ceux-ci n'atteignent l'écran 28. Les moyens 44 sont par exemple constitués par un écran en tungstène dont l'épaisseur peut être de l'ordre de 1 à 3 mm et qui est perpendiculaire à l'axe 22 du dispositif et placé à proximité du sténopé 16, du côté du cône du collimateur 14.

L'écran en tungstène et la plaque 20 peuvent être mobiles dans un logement approprié, ménagé dans le corps 6, ou disposés à l'entrée du collimateur.

Des moyens électromécaniques 46 sont prévus dans le corps 6 pour commander l'escamotage et la mise en place de l'écran 44. Ces moyens 46 sont eux-mêmes commandés à partir du boîtier 26 prévu à cet effet.

L'écran 44 permet d'évaluer l'énergie des photons gamma par transmission, l'intensité de la tache, relative à une source de rayonnement gamma, sur l'image des sources, étant plus faible lorsque l'écran 44 en tungstène obture le collimateur 14 que lorsqu'il est escamoté, et ceci, d'autant plus que l'énergie du rayonnement est faible.

Ce dispositif, bien que satisfaisant à certains égards, pose néanmoins certains problèmes.

En effet, le système d'obturation permet d'assurer l'interchangeabilité du collimateur 14 (ce qui permet de choisir un collimateur, d'ouverture adaptée à l'activité supposée des sources gamma 2 que l'on veut localiser) ainsi qu'une obturation en tout ou rien pour passer du visible au domaine gamma ; mais il ne permet pas d'assurer une variation du tirage du collimateur.

Description de l'invention

L'invention se propose de résoudre ce problème. Elle vise à proposer un dispositif de localisation de sources avec un collimateur permettant d'assurer les trois fonctions suivantes :

- une interchangeabilité facile et aisée du collimateur,
- la possibilité de passer du domaine d'observation visible au domaine d'observation gamma (obturation),
- la variation du tirage du collimateur.

En outre, du fait des conditions dans lesquelles les observations sont effectuées, les fonctions d'obturation et de variation du tirage doivent être assurés à distance, en cours d'observation.

L'invention a donc pour objet un dispositif de localisation en temps réel de sources de rayonnement, susceptibles de se trouver dans une zone, ce dispositif comprenant une chambre à sténopé, dont la paroi forme un blindage vis-à-vis du rayonnement des sources, un collimateur, des moyens d'obturation de la chambre à sténopé, un écran luminescent, transparent dans le domaine lumineux et apte à convertir le rayonnement des sources en un rayonnement lumineux, les moyens d'obturation étant d'une part transparents au rayonnement des sources, et d'autre part aptes à empêcher la lumière de la zone d'atteindre l'écran, une caméra qui est optiquement couplée à l'écran et qui est apte à fournir, sous forme de signaux électriques, une image des sources, grâce au rayonnement lumineux qu'elle reçoit de l'écran, et une image de la zone, grâce à la lumière qu'elle reçoit de cette zone à travers l'écran lorsque les moyens d'obturation sont ouverts, la sensibilité de la caméra étant suffisante pour que l'on obtienne une image acceptable des sources, pour une efficacité donnée de l'écran quant à la détection du rayonnement, les images étant superposables et visibles grâce à des moyens de traitement et de visualisation des signaux électriques, caractérisé en ce que le collimateur comporte deux demi-collimateurs mobiles en rotation autour d'un axe commun de rotation, chaque demi-collimateur comportant :

- une grande et une petite ouvertures, ces ouvertures étant centrées sur l'axe commun de rotation, la petite ouverture étant située dans une surface plane (P, P') perpendiculaire à cet axe,
- un lamage en arc de cercle d'angle $\alpha$ centré sur l'axe de rotation commun et débouchant dans la surface contenant la petite ouverture,
- un ergot pouvant être incorporé dans le lamage en arc de cercle de l'autre demi-collimateur,

et en ce que les moyens d'obturation ont la forme d'une lamelle située entre les deux surfaces planes et s'étendant d'un ergot à l'autre, chaque ergot traversant un trou de la lamelle, cette dernière étant de largeur suffisante pour pouvoir obturer entièrement les deux petites ouvertures.

Avec un tel système, deux fonctions sont assurées, puisque :

- lors de la mise en rotation d'un seul des deux demi-collimateurs autour de l'axe de rotation commun, l'obturateur est d'abord mis en rotation autour de l'ergot fixé sur l'autre demi-collimateur pour être amené en position d'obturation devant les deux petites ouvertures,
- lorsque l'ergot du demi-collimateur en rotation arrive en butée à une extrémité du lamage en arc de cercle du demi-collimateur fixe, ce dernier est emmené en mouvement avec le demi-collimateur mis initialement en rotation.

On peut ensuite aisément combiner ce mouvement, qui est un mouvement de rotation commun avec un mouvement de translation.

Ainsi, l'un des demi-collimateurs peut présenter une surface extérieure de forme cylindrique, dont l'axe de symétrie est confondu avec l'axe de rotation commun des deux demi-collimateurs et qui est filetée sur sa partie extérieure, cette partie filetée s'engageant dans un filetage réalisé dans la paroi de la chambre à sténopé.

De cette façon, lorsque le deuxième demi-collimateur est mis en rotation, son mouvement est converti en mouvement de translation.

La rotation du premier demi-collimateur peut être assurée, par exemple, par le fait que ce premier demi-collimateur est solidaire d'une couronne extérieure cylindrique crantée.

Ainsi, les deux fonctions d'obturation et de variation du tirage peuvent etre assurees à distance pendant l'inspection.

En outre, une seule commande permet d'assurer ces deux fonctions, puisque l'une des fonctions (obturation) est assurée dans un premier temps, et l'autre fonction est assurée dans un deuxième temps.

L'objectif peut être entraîné en rotation par un moteur situé à l'extérieur de la chambre, et des moyens pour transmettre le mouvement du moteur à l'objectif.

Les moyens de détection peuvent comprendre un écran luminescent, une caméra optiquement couplée à l'écran et des moyens de traitement et de visualisation des signaux issus de la caméra.

La caméra peut être placée dans la chambre ou en dehors de la chambre. Dans ce dernier cas, elle est couplée à l'écran luminescent par un faisceau de fibres optiques.

Enfin, l'ensemble peut être inséré dans une enveloppe de protection mécanique.

Description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1, déjà décrite, représente un dispositif de localisation de sources de rayonnement selon l'art antérieur,

- la figure 2 représente une vue générale en coupe d'un dispositif selon l'invention,
- la figure 3 représente une vue de profil, en coupe du collimateur utilisé dans le dispositif de localisation selon l'invention, dans deux positions différentes,
- la figure 4 représente une vue en perspective des deux demi-collimateurs et de la lamelle, constituant le collimateur,
- les figures 5a à 5c représentent différentes positions de la lamelle d'obturation incorporée dans le collimateur utilisé dans le dispositif de localisation selon l'invention.

Description détaillée de modes de réalisation de l'invention.

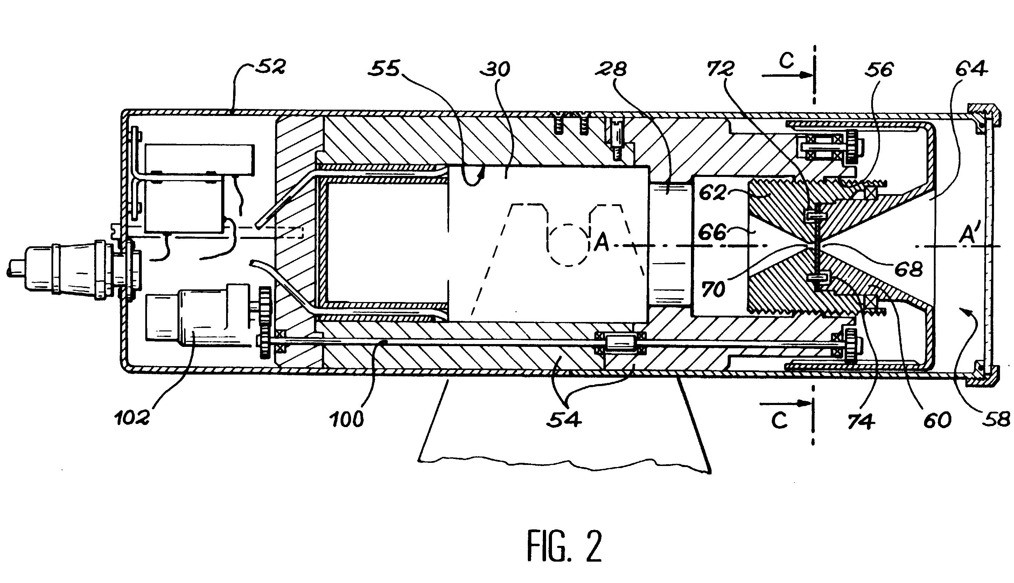

La figure 2 représente une vue en coupe d'un dispositif de localisation de source selon l'invention.

On distingue, sur cette figure, un corps extérieur 52, ou enveloppe, destiné à assurer une protection mécanique et radiologique de l'ensemble de la caméra.

Cette protection mécanique contient une deuxième enveloppe ou paroi de protection 54 qui est destinée, lorsque la caméra est insérée dans un environnement où sont émis des rayons gamma, à protéger des composants électroniques ou optoélectroniques qui pourraient être sensibles à ces rayons.

L'enveloppe ou paroi 54 délimite une chambre 55 à sténopé et présente une ouverture frontale 56, destinée à recevoir l'objectif 58 (figure 2).

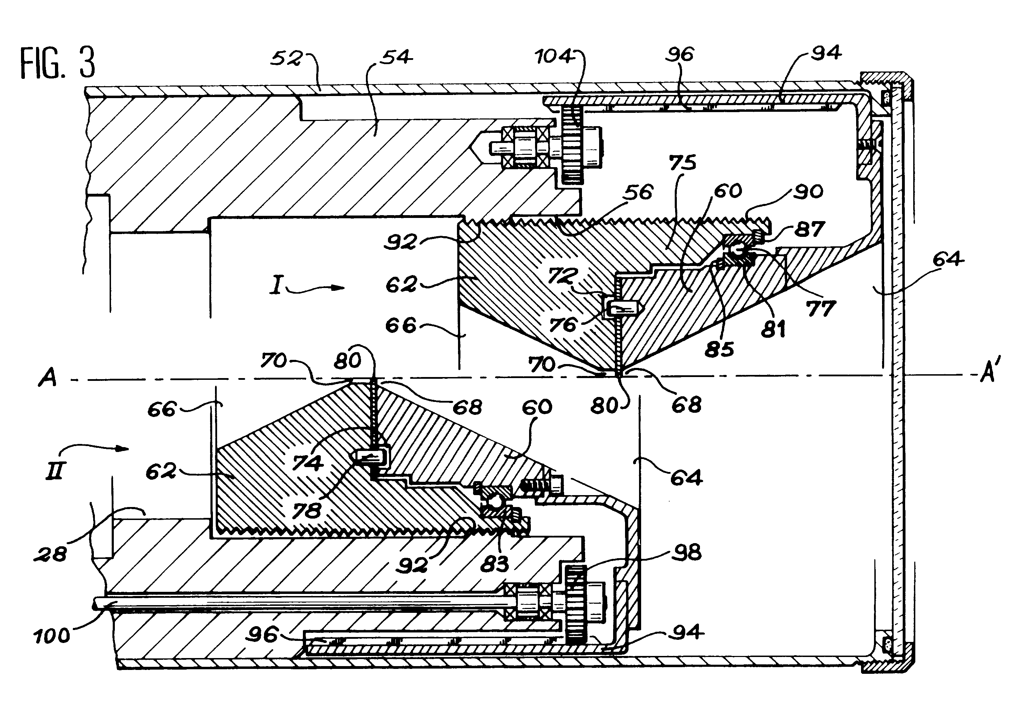

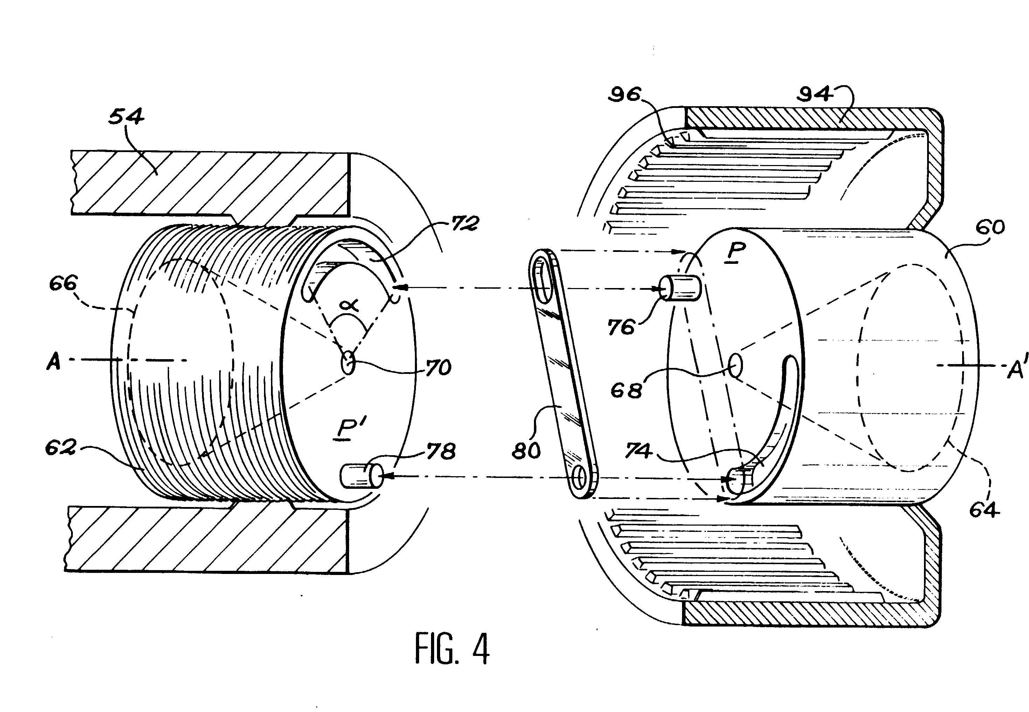

Ce collimateur, qui est également représenté de façon plus détaillée sur les figures 3 et 4, comporte deux parties (60, 62) qui présentent chacune une grande (64, 66) et une petite (68, 70) ouverture. Les deux parties sont mobiles en rotation autour d'un axe commun AA'. Dans la suite, la partie 60 sera dénommée demi-collimateur avant et la partie 62, demi-collimateur arrière.

La grande et la petite ouvertures de chaque demi-collimateur sont inscrites sur un cône de révolution dont l'axe de symétrie est confondu avec l'axe de rotation commun des deux demi-collimateurs. L'angle au sommet du cône peut être compris, par exemple, entre 25 et 90° et est choisi d'autant plus grand que l'énergie du rayonnement émis par les sources à localiser est faible.

Ainsi, deux jeux de demi-collimateurs ont été réalisés, l'un avec un angle au sommet de 38°, l'autre avec un angle au sommet de 52°.

La petite et la grande ouverture de chaque demi-collimateur sont donc centrées sur l'axe de rotation commun AA', et chaque ouverture est contenue dans une surface plane perpendiculaire à l'axe AA'. Pour la petite ouverture, cette surface plane est désignée, sur la figure 4, pour l'un et l'autre demi-collimateurs, par P et P'.

Dans chaque demi-collimateur et débouchant dans le plan P,P' correspondant à ce demi-collimateur, est prévu un lamage 72, 74 en arc de cercle d'angle α, centré sur l'axe de rotation commun AA' des deux demi-collimateurs. De façon préférée, l'angle α vaut 90°.

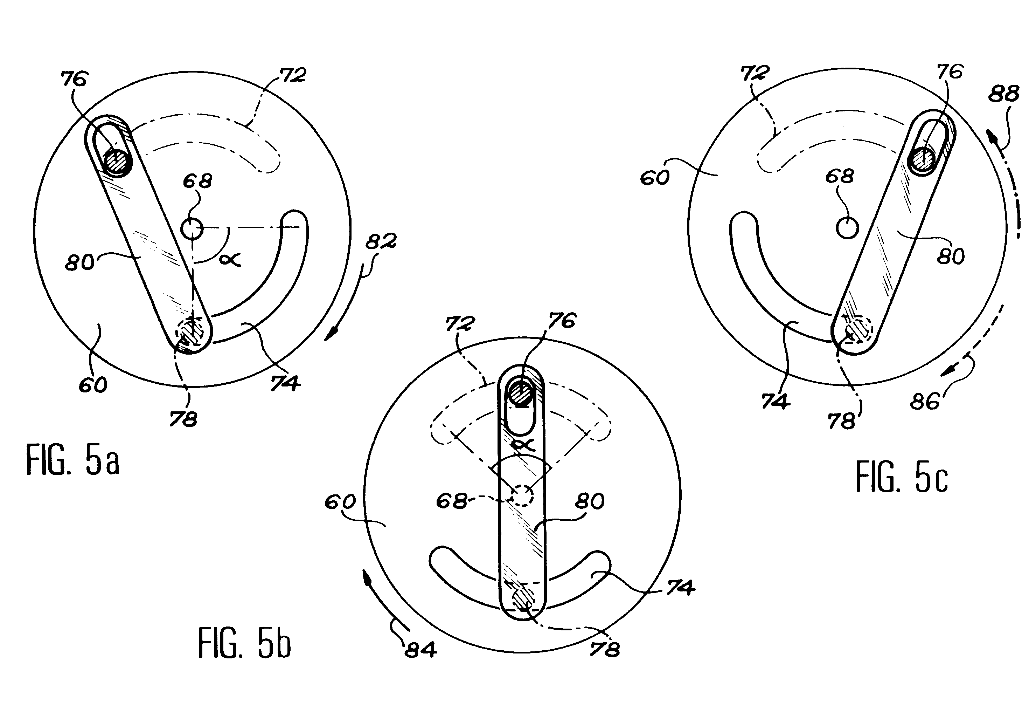

Les lamages 72, 74 sont clairement représentés sur les figures 5a à 5c qui représentent une coupe suivant CC de la figure 2, ainsi que sur la figure 4.

En outre, chacun des demi-collimateurs de l'objectif comporte un ergot 76, 78 destiné à être incorporé dans le lamage en arc de cercle de l'autre demi-collimateur.

Ces ergots traversent également deux trous situés à l'extrémité d'une lamelle 80, située entre les deux surfaces planes P, P' et qui assure le rôle d'obturateur lorsqu'elle passe entre les deux petits orifices 70, 68.

Pour expliquer le fonctionnement du collimateur, on partira de la figure 5a, sur laquelle les deux ergots 76, 78 sont en butée dans les trous en arc de cercle 72, 74.

Lorsqu'on impose au demi-collimateur avant 60 une rotation autour de l'axe commun de rotation AA', symbolisée par la flèche 82 de la figure 5a, le lamage en arc de cercle 74 et l'ergot 76 qui font tous deux partie du demi-collimateur avant 60, sont également entraînés en rotation autour du même axe AA'. L'extrémité supérieure de la lamelle 80 effectue donc également une rotation, mais autour de l'ergot 78, qui reste fixe puisqu'il est solidaire du demi-collimateur arrière 62. Le trou de la lamelle 80, traversé par l'ergot 76 a une forme oblongue, pour que la rotation de la lamelle 80 puisse être correctement assurée. A mi-course, la lamelle 80 est donc en position verticale comme illustré sur la figure 5b, et elle obstrue les petites ouvertures 68 et 70.

Si la caméra est une gamma caméra, les rayons visibles émis par les sources extérieures de rayonnement sont arrêtés par cette lamelle 80, dans leur propagation en direction des éléments de détection situés à l'intérieur du corps 54. Par contre, les rayons gamma pourront traverser la lamelle 80, et on peut alors réaliser, à l'aide de moyens qui seront décrits plus loin, une image de la répartition des sources qui émettent ces rayons gamma en direction de la caméra.

Si on poursuit la rotation dans le même sens (flèche 84 sur la figure 5b), le lamage en arc de cercle 74 et l'ergot 76 poursuivent leur course respective. En bout de course, on arrive à la position de la lamelle telle qu'illustrée par la figure 5c, c'est-à-dire que les petites ouvertures 68 et 70 sont dégagées. Une observation dans le domaine visible est de nouveau possible.

Il faut souligner que, pendant la rotation du demi-collimateur 60 avant, telle qu'illustré sur les figures 5a à 5c, le demi-collimateur arrière 62 n'est jamais entraîné en rotation. Le demi-collimateur avant est en outre guidé dans sa rotation par un roulement à billes 77 dont la bague intérieure 81 et la bague extérieure 83 s'appuient respectivement sur la surface extérieure du demi-collimateur avant 60 et la surface intérieure d'une couronne 75 qui prolonge le demi-collimateur arrière 62 vers l'avant de façon à entourer le demi-collimateur avant 60.

Ce n'est que lorsque le mouvement de rotation du demi-collimateur avant 60 se poursuit à partir de la position de la figure 5c (flèche 86 en traits interrompus) que ce demi-collimateur arrière 62 est mis lui aussi en rotation, du fait de la position en butée de l'ergot 76 à l'extrémité du lamage 72 en arc de cercle. La lamelle 80 reste alors dans la même position par rapport aux deux demi-collimateurs 60 et 62 et les trois éléments 60, 72, 62 subissent le même mouvement de rotation.

Si, au contraire, le mouvement du demi-collimateur avant 60 est inversé à partir de la position de la figure 5c (flèche 88) la lamelle 80 et le demi-collimateur avant 60 sont ramenés dans la position de la figure 5b, le demi-collimateur arrière 62 étant toujours immobile.

Ce système assure donc successivement deux fonctions :

-   dans un premier temps, l'obturation puis la mise à jour des petites ouvertures 70 et 68 en ne modifiant pas la position du demi-collimateur arrière 62, sans aucune variation du tirage,
-   dans un deuxième temps, la rotation de l'ensemble des deux demi-collimateurs, la lamelle 80 étant dans une position dans laquelle elle n'obture pas les ouvertures 70 et 68. L'observateur voit alors dans le domaine visible.

On peut prévoir un mécanisme ou des moyens pour combiner le mouvement de rotation du demi-collimateur arrière 62 avec un mouvement de translation. Ainsi, si ce demi-collimateur 62 présente une surface extérieure 90 cylindrique (voir figures 3 et 4) et si cette surface extérieure est filetée, le demi-collimateur 62 peut être engagé dans un filetage 92 réalisé dans le corps de l'enveloppe de protection 54. La mise en rotation du demi-collimateur arrière 62 entraîne donc automatiquement son déplacement, par exemple vers l'arrière de la caméra, et la fait passer de la position avant I, illustrée sur la figure 3, à la position II arrière sur cette même figure 3. Le filetage 90 doit donc être prévu sur une longueur suffisante pour que le déplacement du collimateur soit assuré entre les deux positions extrêmes. Il peut se prolonger sur toute la surface externe de la partie avant 75 du demi-collimateur arrière.

Des segments 85, 87 respectivement fixés sur le demi-collimateur avant 60 et le demi-collimateur arrière 62 permettent, en combinaison avec les bagues 81, 83 du roulement à billes, d'entraîner le demi-collimateur avant à la suite du demi-collimateur arrière, notamment dans un déplacement vers l'arrière de l'appareil (sens I→II sur la figure 3).

Dans l'appareil qui a été réalisé par le demandeur, l'écart entre les deux positions extrêmes est de 50 mm.

Une pièce 94 en forme de couronne, solidaire du demi-collimateur avant 60 et extérieure à celui-ci, permet d'entraîner ce dernier en rotation. Ainsi qu'illustré sur les figures 3 et 4, cette couronne présente une surface intérieure 96 crantée sur laquelle est embrayé un pignon 98 qui transmet, via un arbre 100, le mouvement de rotation d'un moteur 102 (figure 2). Pour assurer le centrage et un meilleur guidage de la couronne, celle-ci peut s'appuyer sur d'autres pignons solidaires de l'enveloppe 54, notamment en position de sortie (par exemple référence 104 sur la figure 3).

La vitesse et le sens de rotation du moteur 102 peuvent être commandés de l'extérieur du boîtier 52 par un dispositif non représenté sur les figures.

Pour un tirage maximal de 50 mm, un moteur entraînant l'ensemble à une vitesse de 1 mm/s permet de parcourir toute la course en 50 secondes.

Ainsi, un seul système de commande permet de piloter deux fonctions de l'objectif : d'une part le passage du domaine d'observation visible au domaine d'observation gamma (obturation), et d'autre part la variation du tirage de l'objectif.

Pendant toute manoeuvre de tirage, en avant ou en arrière, la lamelle 80 est en position de non obturation des ouvertures 70 et 68 et l'utilisateur peut observer ce qui se présente dans le champ de la caméra en lumière visible. A tout moment, par exemple lorsque le tirage est convenablement ajusté, il peut interrompre la variation du tirage et passer en observation gamma. Pour cela, il suffit d'inverser le sens de rotation du demi-collimateur avant 60, et de faire subir à celui-ci une rotation d'angle $\frac{\alpha}{2}$, ce qui ramène la lamelle 80 en position d'obturation des ouvertures 70 et 68.

Ce système permet en outre d'assurer une parfaite correspondance entre les champs observés dans les domaines visible et gamma. En effet, pendant le passage de la position d'obstruction des trous 68 et 70 par la lamelle 80 (figure 5b) à la position de non-obstruction des trous (figures 5a ou 5c), le demi-collimateur avant 60 n'entraîne pas en rotation le demi-collimateur arrière 62, et il n'y a alors aucune modification du tirage.

En fait, à partir d'une position de non-obturation (observation dans le domaine visible), seul le sens de rotation du moteur permet de choisir entre les deux fonctions d'obturation et de variation du tirage.

Différents moyens permettant l'observation du rayonnement issu des sources 2 devront être prévus.

Ces moyens peuvent être ceux décrits dans le brevet US-5 204 533, délivré le 20 Avril 1993, qui ont déjà été rappelés ci-dessus, en relation avec la figure 1 :

-   un écran luminescent 28, situé derrière l'objectif décrit ci-dessus, et rappelé en référence sur les figures 2 et 3,
-   une caméra 30 couplée optiquement à l'écran 28, rappelée en référence sur la figure 2,
-   des moyens 40 d'acquisition en temps réel, de traitement et de visualisation des signaux électriques envoyés par la caméra,
-   des moyens de mémorisation 42.

Ainsi, l'écran 28 peut être, d'une part, transparent dans le domaine visible et, d'autre part, apte à convertir le rayonnement gamma des sources 2 en un rayonnement détectable par la caméra 30.

On choisira, pour le matériau constitutif de l'écran, un matériau de préférence dense et ayant un bon rendement lumineux. L'écran sera de préférence mince (quelques mm d'épaisseur) pour que l'on ait une bonne résolution spatiale.

De préférence, la caméra 30 est très sensible pour permettre l'utilisation d'un écran mince, fait d'un matériau scintillateur transparent dans le domaine visible, et a une bonne sensibilité de détection du rayonnement gamma. Il est également préférable que la caméra 30 ait une bonne tenue en ambiance gamma et une bonne fiabilité.

Par exemple, la fenêtre d'entrée de la caméra 30 est plaquée contre l'écran 28, ce dernier étant ainsi placé entre l'objectif et la caméra 30.

On peut ainsi prévoir de positionner la caméra en dehors du corps 54, loin de celui-ci. Un faisceau de fibres optiques, aptes à conduire le rayonnement visible émis par l'écran et la lumière visible de la zone observée, relie alors l'écran 28 à la caméra 30 en traversant le corps 54. Une extrémité du faisceau de fibres aboutit normalement à l'écran et recouvre la surface de celui-ci. L'autre extrémité du faisceau aboutit normalement à la fenêtre d'entrée de la caméra et recouvre cette fenêtre.

Le mécanisme de variation du tirage de la caméra a déjà été expliqué ci-dessus.

En cours d'utilisation, lorsque l'obturateur 80 est fermé, on obtient au bout d'un certain temps (quelques secondes, par exemple 10 s) l'image des sources de rayonnement gamma. Cette image est stockée dans une première zone de mémoire des moyens 40.

Ensuite, en commandant l'ouverture de l'obturateur 80, on obtient, de façon quasi-instantanée, une image (en lumière visible) de la zone observée, dans laquelle sont les sources 2. Cette seconde image est également stockée dans une seconde zone de mémoire des moyens 40, distincte de la première zone de mémoire.

Après traitement des images (et notamment possibilité de coloration des "taches") le repérage correct des sources se fait en superposant l'image en rayonnement γ à l'image dans le domaine visible dues à l'activité des sources 2 afin de bien repérer ces sources et distinguer leur "luminosité gamma" de la luminosité (en lumière visible) d'objets qui sont présents dans la zone observée mais n'émettent aucun rayonnement gamma, la première et la seconde images sont affichées superposées sur l'écran des moyens 40, ce qui permet le repérage des sources de rayonnement gamma.

Pour effectuer des mesures d'activité des sources 2, on utilisera la caméra en combinaison avec un télémètre laser selon la méthode décrite dans le brevet US-5 204 533.

Signalons que l'appareil décrit ci-dessus permet non seulement de remplir les deux fonctions de variation du tirage et de passage du champ d'observation visible au champ d'observation gamma, mais permet également un démontage rapide de l'objectif, puisqu'il suffit de dévisser celui-ci et de le remplacer par exemple par un objectif d'ouverture différente.

## Revendications

1. Dispositif de localisation en temps réel de sources de rayonnement, susceptibles de se trouver dans une zone, ce dispositif comprenant une chambre (55) à sténopé, dont la paroi (54) forme un blindage vis-à-vis du rayonnement des sources, un collimateur (60, 62) et des moyens (80) d'obturation de la chambre à sténopé, un écran convertisseur (28), transparent dans le domaine lumineux et apte à convertir le rayonnement des sources en un rayonnement lumineux, les moyens d'obturation étant d'une part transparents au rayonnement des sources, et d'autre part aptes à empêcher la lumière de la zone d'atteindre l'écran, une caméra (30) qui est optiquement couplée à l'écran et qui est apte à fournir, sous forme de signaux électriques, une image des sources, grâce au rayonnement lumineux qu'elle reçoit de l'écran, et une image de la zone, grâce à la lumière qu'elle reçoit de cette zone à travers l'écran lorsque les moyens d'obturation sont ouverts, la sensibilité de la caméra étant suffisante pour que l'on obtienne une image acceptable des sources, pour une efficacité donnée de l'écran quant à la détection du rayonnement, les images étant superposables et visibles grâce à des moyens (40) de traitement et de visualisation des signaux électriques, caractérisé en ce que le collimateur comporte deux demi-collimateurs (60, 62) mobiles en rotation autour d'un axe commun de rotation (AA'), chaque demi-collimateur comportant :

   - une grande (64, 66) et une petite (68, 70) ouvertures, ces ouvertures étant centrées sur l'axe commun de rotation, la petite ouverture étant située dans une surface plane (P, P') perpendiculaire à cet axe,
   - un lamage (72, 74) en arc de cercle d'angle α centré sur l'axe de rotation commun (AA') et débouchant dans la surface contenant la petite ouverture,
   - un ergot (76, 78) pouvant être incorporé dans le lamage en arc de cercle de l'autre demi-collimateur,

   et en ce que les moyens d'obturation ont la forme d'une lamelle (80) située entre les deux surfaces planes et s'étendant d'un ergot à l'autre, chaque ergot traversant un trou de lamelle, cette dernière étant de largeur suffisante pour pouvoir obturer entièrement les deux petites ouvertures (68, 70).

2. Dispositif selon la revendication 1, caractérisé en ce que la grande et la petite ouverture de chaque demi-collimateur sont inscrites sur un cône de révolution dont l'axe de symétrie est confondu avec l'axe de rotation commun des deux demi-collimateurs.

3. Dispositif selon la revendication 2, caractérisé en ce que l'angle au sommet du cône est compris entre 25 et 90°.

4. Dispositif selon la revendication 1, caractérisé en ce que $\alpha = 90°$.

5. Dispositif selon la revendication 1, caractérisé en ce qu'un des trous de la lamelle (80) est oblong.

6. Dispositif selon la revendication 1, caractérisé en ce qu'il comporte en outre des moyens (90, 92) pour combiner le mouvement de rotation des demi-collimateurs avec un mouvement de translation.

7. Dispositif selon la revendication 6, caractérisé en ce que l'un des deux demi-collimateurs présente une surface extérieure (90) de forme cylindrique, dont l'axe de symétrie est confondu avec l'axe de rotation des deux demi-collimateurs, et qui est filetée sur sa partie extérieure, cette partie filetée s'engageant dans un filetage (92) réalisé dans la paroi (54).

8. Dispositif selon la revendication 7, caractérisé en ce que l'autre demi-collimateur (60) est solidaire d'une couronne extérieure cylindrique crantée (94).

9. Dispositif selon l'une des revendications précédentes, caractérisé en ce que le collimateur est entraîné en rotation par un moteur (102) situé à l'extérieur de la chambre (54), et des moyens (98, 100) pour transmettre le mouvement du moteur au collimateur.

10. Dispositif selon l'une des revendications précédentes, caractérisé en ce que la caméra (30) est placée dans la chambre (54).

11. Dispositif selon l'une des revendications 1 à 9, caractérisé en ce que la caméra est placée en dehors de la chambre (54) et est couplée à l'écran par un faisceau de fibres optiques, les extrémités des fibres étant placées dans la chambre (54).

12. Dispositif selon l'une des revendications précédentes, caractérisé en ce qu'il comporte en outre une enveloppe de protection mécanique (52).

**Patentansprüche**

1. Vorrichtung zur Echzeitlokalisierung von eventuell in einer Zone befindlichen Strahlenquellen, wobei diese Vorrichtung eine Lochblendenkammer (55) umfaßt, deren Wand (54) eine Abschirmung gegenüber der Strahlung der Quellen bildet, sowie einen Kollimator (60, 62) und Verschlußeinrichtungen (80) der Lochblendenkammer, ein Umwandlungsfilter (28), durchlässig im Lichtbereich und fähig, die Strahlung der Quellen umzuwandeln in eine Lichtstrahlung, wobei die Verschlußeinrichtungen einerseits durchlässig sind für die Strahlung der Quellen und andererseits fähig sind, das Licht der Zone daran zu hindern, das Filter zu erreichen, eine Kamera (30), optisch mit dem Filter gekoppelt und fähig, in Form von elektrischen Signalen dank der Lichtstrahlung, die sie von dem Filter empfängt, ein Bild der Quellen zu liefern und ein Bild von der Zone dank des Lichts, das sie von dieser Zone durch das Filter hindurch empfängt, wenn die Verschlußeinrichtungen geöffnet sind, wobei die Empfindlichkeit der Kamera ausreichend ist, um bei einem bestimmten Wirkungsgrad des Filters bezüglich der Strahlungsdetektion ein akzeptables Bild der Quellen zu erhalten und Bilder überlagert werden können und sichtbar gemacht werden können dank Verarbeitungs- und Visualisationseinrichtungen (40) der elektrischen Signale,

**dadurch gekennzeichnet,**

daß der Kollimator zwei um eine gemeinsame Drehachse (AA') drehbare Halbkollimatoren (60, 62) umfaßt, wobei jeder Halbkollimator umfaßt:

- eine große (64, 66) und eine kleine (68, 70) Öffnung, wobei diese Öffnungen auf die gemeinsame Drehachse zentriert sind und die kleine Öffnung sich in einer ebenen, zu dieser Achse senkrechten Fläche (P, P') befindet,

- eine kreisbogenförmige Senkung (72, 74) über einen Winkel $\alpha$, auf die gemeinsame Rotationsachse (AA') zentriert und in der die kleine Öffnung enthaltenden Fläche offen,

- einen Stift (76, 78), der in der kreisbogenförmigen Senkung des anderen Halbkollimators sitzt,

und dadurch, daß die Verschlußeinrichtungen die Form einer Lamelle und sich von einem Stift zum anderen erstreckt, wobei jeder Stift ein Loch der Lamelle durchquert und diese letztere eine ausreichende Breite aufweist, um die beiden kleinen Öffnungen (68, 70) vollständig verschließen zu können.

2. Vorrichtung nach Anspruch 1, dadurch gekennzeichnet, daß die große und die kleine Öffnung jedes Halbkollimators in einem Kreiskegel ausgebildet sind, dessen Symmetrieachse zusammenfällt mit der gemeinsamen Rotationsachse der beiden Halbkollimatoren.

3. Vorrichtung nach Anspruch 2, dadurch gekennzeichnet, daß der Winkel an der Spitze des Kegel enthalten ist zwischen 25 und 90°C.

4. Vorrichtung nach Anspruch 1, dadurch gekennzeichnet, daß $\alpha=90°$ ist.

5. Vorrichtung nach Anspruch 1, dadurch gekennzeichnet, daß eines der Löcher der Lamelle (80) länglich ist.

6. Vorrichtung nach Anspruch 1, dadurch gekennzeichnet, daß sie außerdem Einrichtungen (90, 92) zum Kombinieren der Drehung der Halbkollimatoren mit einer Translationsbewegung umfaßt.

7. Vorrichtung nach Anspruch 6, dadurch gekennzeichnet, daß einer der beiden Halbkollimatoren eine gewindete Außenfläche von zylindrischer Form aufweist, deren Symmetrieachse zusammenfällt mit der Drehachse der beiden Halbkollimatoren, wobei dieser gewindete Halbkollimator in ein Gewinde (92) geschraubt wird, das in der Wand (54) ausgebildet ist.

8. Vorrichtung nach Anspruch 7, dadurch gekennzeichnet, daß der andere Halbkollimator (60) fest verbunden ist mit einem gezahnten Außenring (94).

9. dadurch gekennzeichnet, daß der Kollimator durch einen Motor (102), der sich außerhalb der Kammer (55) befindet, und Einrichtungen (98, 100) gedreht wird.

10. Vorrichtung nach einem der vorangehenden Ansprüche, dadurch gekennzeichnet, daß die Kamera (30) in der Kammer (55) angeordnet ist.

11. Vorrichtung nach einem der Ansprüche 1 bis 9, dadurch gekennzeichnet, daß die Kamera sich außerhalb der Kammer (55) befindet und mit dem Filter durch ein Bündel optischer Fasern verbunden ist, wobei die Enden der Fasern in der Kammer (55) angeordnet sind.

12. Vorrichtung nach einem der vorangehenden Ansprüche, dadurch gekennzeichnet, daß sie außerdem eine mechanische Schutzhülle (52) umfaßt.

**Claims**

1. Device for the real time location of radiation sources, liable to be located in an area, said device comprising a pinhole camera (55), whose wall (54) forms a shield with respect to the radiation of the sources, a collimator (60, 62), means (80) for obturating the pinhole camera, a phosphor screen (28), transparent in the luminous range and able to convert the radiation of the sources into a light radiation, the obturating means being on the one hand transparent to the radiation of the sources and on the other are able to prevent the light from the area reaching the screen, a camera (30) which is optically coupled to the screen and able to supply, in the form of electrical signals, an image of the sources, as a result of the light radiation which it receives from the screen, and an image of the area, as a result of the light which it receives from said area through the screen when the obturating means are open, the sensitivity of the camera being adequate for it to obtain an acceptable image of the sources, for a given efficiency of the screen with respect to the detection of the radiation, the images being superimposable and visible due to the means (40) for the processing and display of the electrical signals, characterized in that the collimator comprises two half-collimators (60, 62) rotatable about a common rotation (AA') axis, each half-collimator comprising:

- a large (64, 66) and a small (68, 70) aperture, said apertures being centred on the common rotation axis, the small aperture being located in a planar surface (P, P') perpendicular to said axis,
- a circular arc spotfacing (72, 74) of angle $\alpha$ centred on the common rotation axis (AA') and issuing into the surface containing the small aperture,
- a pin (76, 78) which can be incorporated into the circular arc spotfacing of the other half collimator,

and in that the obturating means are in the form of a lamella (80) located between the two planar surfaces and extending from one pin to the other, each pin passing through a hole in the lamella, the latter having an adequate width to be able to entirely obturate the two small apertures (68, 70).

2. Device according to claim 1, characterized in that the large and small aperture of each-collimateur are inscribed on a cone of revolution, whose axis of symmetry coincides with the common rotation axis of the two half-collimators.

3. Device according to claim 2, characterized in that the apex angle of the cone are between 25 and 90°.

4. Device according to claim 1, characterized in that the angle $\alpha$ is 90°.

5. Device according to claim 1, characterized in that one of the holes in the lamella (80) is oblong.

6. Device according to claim 1, characterized in that it also has means (90, 92) for combining the rotary movement of the half-collimators with a translatory movement.

7. Device according to claim 6, characterized in that one of the two half-collimators has an outer cylindrical surface (90), whose axis of symmetry coincides with the rotary axis of the two half-collimators and which is threaded on its outer portion, which engages in a thread (92) made in the wall (54).

8. Device according to claim 7, characterized in that the other half-collimator (60) is integral with an outer, cylindrical, notched ring (94).

9. Device according to any one of the preceding claims, characterized in that the collimator is rotated by a motor (102) located outside the pinhole camera (54), means (98, 100) are provided for transmitting the movement of the motor to the collimator.

10. Device according to any one of the preceding claims, characterized in that the camera (30) is placed in the pinhole camera (54).

11. Device according to any one of the claims 1 to 9, characterized in that the camera is placed outside the pinhole camera (54) and is coupled to the screen by a bundle of optical fibres, the ends of the fibres being located in the pinhole camera (54).

12. Device according to any one of the preceding claims, characterized in that it also comprises a mechanical protection envelope (52).

FIG.1

EP 0 674 188 B1

FIG. 2

EP 0 674 188 B1

FIG. 3

FIG. 4

FIG. 5a

FIG. 5b

FIG. 5c

EP 0 674 188 B1